# EUROPEAN PATENT SPECIFICATION

(11) **EP 2 242 889 B1**
(45) Date of publication and mention of the grant of the patent: **21.10.2015**
(21) Application number: 07846451.8
(22) Date of filing: 19.12.2007
(51) Int. Cl.: E04D 13/03, F16B 19/00, E04D 13/035, F16B 21/02

(54) **WEATHER SHIELD**
WETTERSCHUTZ
PROTECTION CONTRE LES INTEMPÉRIES

(43) Date of publication of application: 27.10.2010
(73) Proprietor: VKR Holding A/S, 2970 Hørsholm (DK)
(72) Inventor: JENSEN, Bent Kirk, DK-2000 Frederiksberg (DK)
(74) Representative: Trier, Mikkel Roed
(86) International application number: PCT/DK2007/050191
(87) International publication number: WO 2009/076951

(56) References cited:
- EP-A1- 0 169 772
- EP-A1- 1 396 647
- CH-A- 393 700
- DE-B3-102006 020 697
- DE-U- 7 521 548
- FR-A- 2 141 633
- FR-A- 2 217 497
- FR-A1- 2 850 719
- GB-A- 1 103 521
- GB-A- 2 321 667
- JP-A- 2005 146 781
- JP-U- S6 022 658
- NL-A- 6 513 475
- NL-A- 7 312 441
- US-A- 2 634 146
- US-A- 3 694 013
- US-A- 5 897 278

## Description

The present invention relates to a weather shield according to the introductory part of claim 1, which comprises a number of fasteners for fastening the weather shield to a hollow sash member profile of a window sash.

To shield off a window portion positioned more or less horizontally in a flat roof it is known to position a dome-shaped weather shield above a sash of the window portion to form a skylight or roof window. The sash is embedded in a frame, which is secured to the roof, the sash and frame together forming the window portion of the window or skylight. The purpose of the weather shield is to divert water from rainfall, leaves etc. from the window by means of gravitational forces. The weather shield is typically attached to the sash by means of screws or bolts, an oblong part of each screw or bolt being guided through a peripheral hole of the weather shield. A head part of the screw or bolt abuts an upper surface of the weather shield, the oblong part extending through the hole of the weather shield to be fastened in corresponding bores of the sash.

The weather shield is typically transported separately from the sash and mounted on the sash after the window portion has been mounted in the roof. A tool such as a suitable screwdriver corresponding to slots of the screws or bolts is necessary to fasten the screws or bolts through the holes of the weather shield and into the sash. The fastening process is thus slow and cumbersome. During repairs, cleaning or dismounting the window it is equally problematic to release the weather shield from the sash.

FR 2 217 497 A discloses a weather shield according to the preamble of claim 1.

It is the object of the invention to provide a weather shield of the type mentioned in the introduction, with which it is possible to fast, reliably and readily attach and release the weather shield to a window sash without the use of a separate tool.

This object is met with a weather shield, which comprises the features of claim 1.

According to the invention it is thus possible to manually activate the fastener without the use of a separate tool. A simple movement by hand will engage the first fastening means of the fastener with a corresponding engagement means of the sash. It is thus made possible to attach and release a weather shield to a window sash in a fast, reliable and easy way.

In an embodiment said radial projection is clog-shaped, an upwards projecting tip end of said clog shape forming said engagement member of said fastener. In a further development said first fastening means comprises a further radial protrusion corresponding to and protruding substantially oppositely to said radial protrusion for being snap-locked to corresponding engagement means of said sash. Hereby, a stronger fastening to the sash is provided, preventing the fastener from being tilted when being rotated to or from a locked position.

In another embodiment said head part comprises grip means operable by hand to rotate said fastener such as to provide engagement between said first fastening means of said fastener and said engagement means of said sash. In a development of this embodiment said grip means comprises two finger depressions positioned such as, in a fastened position of said fastener, to allow for rain water and snow falling on said weather shield to pass said head part.

According to the invention a gasket member for abutting said upper surface of said weather shield is provided on a lower surface of said head part. The gasket hinders intrusion of water though the hole in the weather shield. Elasticity of the gasket provides for an easier fastening of the fastener.

In another embodiment the fastener further comprises a second fastening means, preferably a snap lock, adapted to be positioned abutting a lower surface of said weather shield when said connection part extends through said hole of said weather shield to, cooperating with said head part, be substantially unreleasable from and rotatable in relation to said weather shield. Hereby, the fastener will be able to remain secured to a weather shield even in a dismounted state of the weather shield, making it even easier to fasten the weather shield to the sash.

In another embodiment said fasteners are positioned to fasten a sash of a window portion to a weather shield covering said sash, said fastener extending through a peripheral hole of said weather shield to engage said sash, said sash comprising extruded sash members with a hollow sash member profile. If the engagement member is clog-shaped, an upwards projecting tip end of said clog shape forming said engagement member of said fastener, said engagement means of said sash member preferably comprises a downwards protruding bead, said tip end of said engagement member of said fastener extending upwards to engage said downwards protruding bead such as to snap lock said fastener and said sash member to each other on rotation of said fastener. In another development of this embodiment each said peripheral hole is formed in an upwardly protruding dimple of said weather shield, which provides elasticity of the weather shield to ensure that the weather shield is not destroyed on activation of the fastener. In another development said sash on an upper surface comprises a longitudinally extending resilient sealing member abutting a lower surface of said weather shield, which similarly provides elasticity ensuring that the weather shield is not destroyed on activation of the fastener. In another development said window portion comprises a top, a bottom and two side sash members defining said window sash, and a top, a bottom and two side frame members defining a window frame, said bottom sash member being hinged to said bottom frame member by means of a pivot hinge defining a pivot axis such as to pivotally connect said window sash to said window frame.

In a preferred embodiment of the weather shield according to the invention said respective fasteners comprise a second fastening means, preferably a snap lock, positioned abutting a lower surface of said weather shield, said fasteners, due to cooperation between said second fastening means and said head part, being substantially unreleasable from and rotatable in relation to said weather shield.

The invention will be explained in detail in the following by means of examples of embodiments with reference to the schematic drawing, in which
Fig. 1 is a perspective view of an embodiment of a window,
Fig. 2 is a cross-sectional view of the window according to Fig. 1,
Fig. 3 is a detail of the cross-sectional view of Fig. 2,
Fig. 4 is a perspective view of an embodiment of a fastener of a weather shield according to the present invention,
Fig. 5 is a side view of the fastener of Fig. 4,
Fig. 6 is an end view of the fastener of Fig. 4 seen from the right of the fastener as shown in Fig. 5, and
Fig. 7 is an end view of the fastener of Fig. 4 seen from the left of the fastener as shown in Fig. 5.

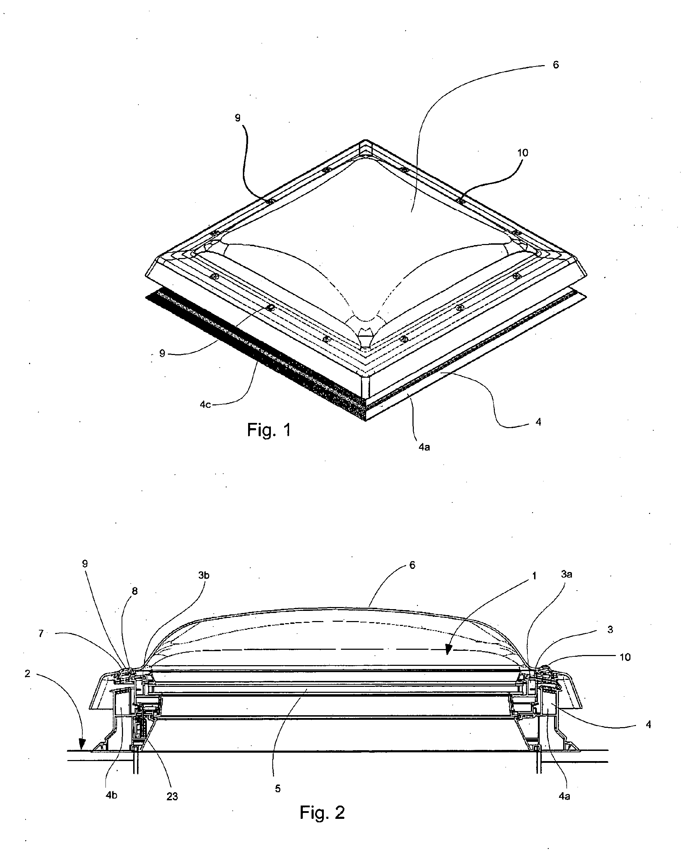

Figs 1 and 2 show different views of a window or skylight. The window comprises a rectangular window portion 1 in the form of a Velux® top-hung roof window (GHL type), which is able to pivot about a horizontal axis positioned along a bottom of the skylight (to the lower right in Fig. 1 and to the right in Fig. 2). The window portion 1 is installed in a flat roof 2 and comprises a sash 3 positioned in a frame 4, which are both made up of extruded, hollow PVC profiles (in the present context flat roofs are defined as roofs having an inclination in relation to horizontal of less than about 15°). In other embodiments the frame and sash may be in the form of for example extruded aluminium profiles and they may comprise wooden parts.

The sash 3 comprises a bottom 3a, a top 3b and two side (not shown) sash members and encloses a windowpane 5 with two layers of glazing sandwiching a layer of gas to provide insulation glazing. The frame 4 comprises a bottom 4a, a top 4b and two side frame members, of which only one side frame member, 4c, is shown (in Fig. 1). The bottom sash member 3a is pivotally connected to the bottom frame member 4a by means of two hinges (not shown) defining a pivot axis.

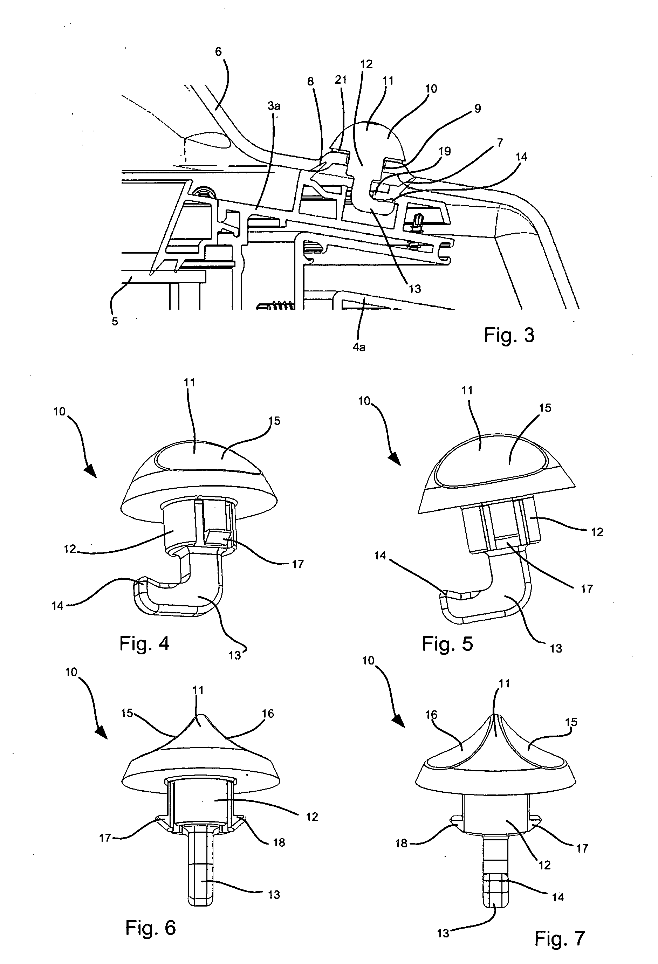

A weather shield according to the invention in the form of a dome-shaped acrylic plate or dome 6 is attached to the sash 3 protecting the window portion 1. Pivoting the sash 3 and dome 6 about the pivot axis by means of a chain operator 23 embedded in the top frame member 4b provides movement between an open and a closed position of the window. The chain operator 23 may be driven automatically and may be radio controlled. Supporting the dome portion 6 are longitudinally extending sealing projections or weather strips 7, 8, sealing the sash 3 against the dome portion 6, cf. Figs 2 and 3.

The weather shield 6 comprises peripheral holes 9. In Figs 1 and 2 a fastener 10 has been inserted through one of the peripheral holes 9, the fastener 10 being an embodiment of the fastener of the weather shield according to the invention. Note that in the present embodiment similar, not shown fasteners are to be inserted in the remaining holes 9 of the weather shield 6 as shown in Fig. 1. Fig. 3 shows a detail of the cross-sectional view of Fig. 2.

The fastener 10 is shown in more detail in Figs 4 to 7. It comprises a head part 11 connected to a connection part 12, the outer dimensions of which correspond to the inner dimensions of the holes 9. The connection part 12 extends into a first fastening means in the form of a clog-shaped radial protrusion 13 with an engagement member in the form of an upwards projecting tip end 14 of said clog shape. The head part 11 comprises grip means in the form of two finger depressions 15, 16. The connection part 12 comprises second fastening means in the form of two oppositely positioned snap locks 17, 18. The fastener 10 is integrally molded from Zytel 80633, i.e. acrylic with 33% glass.

In Figs 2 and 3 the fastener 10 is shown in a locked condition in which it fastens the weather shield 6 to the sash 3. The head part 11 has a lower, flat surface, which is positioned abutting an upper surface of the weather shield 6, the connection part 12 extending through a hole of the weather shield 6 into the bottom sash member 3a. As is visible in Fig. 3 the peripheral hole of this figure is formed in an upwardly protruding dimple 20 of the weather shield 6; the same is the case for all the peripheral holes 9. In the locked position the tip end 14 of the radial protrusion 13 engages a corresponding engagement means of the sash 3 in the form of a downwards protruding longitudinally extending bead 19. The bead 19 extends in the entire circumference of the sash 3, forming a tip end of a likewise longitudinally extending part of the sash, making it somewhat resilient in an upwards direction.

When inserting the fastener into the hole the snap locks 17, 18 are positioned abutting a lower surface of the weather shield 6. Hereby, the lower surface of the head part 11 and the snap locks 17, 18 at all times cooperate to secure the fastener in the hole. To release the fastener 10 from the hole, the snap locks 17, 18 will need to be released from the inside of the weather shield 6.

The finger depressions 15, 16 are adapted such that in the fastened position of the fastener 10 as shown in Figs. 2 and 3 rain water and snow are allowed to readily pass the head part 11.

Between the dimple 20 and the lower surface of the head part 11 a soft acrylic gasket member 21 is provided. This gasket member 21 is somewhat resilient, providing for a corresponding resiliency of the fastener 10, which is made use of when fastening or releasing the fastener 10 as is explained in more detail below. In the present embodiment the gasket member 21 is secured, i.e. glued to the dimple 20; in other embodiments it may form part of the fastener.

The tip end 14 is released from the bead 19 of the bottom sash member 3a by means of rotation of said fastener. Rotation can be carried out without the use of a separate tool placing a thumb and an index finger of one hand in the finger depressions 15, 16, respectively. The fastener 10 can be rotated either way about the connection part 12, whereby the tip end 14 passes the downwards protruding bead 19, and the fastener 10 and weather shield 6 is released from the sash 3. The combined resilience of the gasket member 21, longitudinal sealing members 7, 8, bead 19 and fastener itself makes it possible for the tip end 14 to pass the bead 19 with a snapping sound and sensation telling a user that the fastener 10 has been released.

From the released position rotating the fastener 10 to snap back to the original, locked position is done in a corresponding manner.

The gasket 21 and sealing members 7, 8 also ensure that the weather shield 6 is watertight in the area of the hole in the weather shield 6.

The engagement member of the fastener and the engagement means of the sash can be provided in other forms. The tip ends may for example turn opposite ways compared to the embodiment in the drawings, still providing a suitable snap lock.

If one wishes a stronger fastener, it may be manufactured partly or in whole from for example zinc or aluminium or other suitable materials. Also, a further radial protrusion corresponding to and protruding oppositely to the radial protrusion 13 may be provided to provide for a stronger attachment. This would also prevent the fastener from tilting when being rotated to or from a locked position (see below). The further radial protrusion may be similar to the radial protrusion 13.

## Claims

1. A weather shield (6) for being fastened to a hollow sash member profile of a window sash (3), comprising a number of fasteners (10) for fastening the latter to said hollow sash member profile, each said fastener (10) comprising a head part (11) connected to a connection part (12), the respective said head parts (11) being positioned abutting an upper surface of said weather shield (6), the respective said connection parts (12) extending through peripheral holes (9) of said weather shield (6) so as to be adapted to extend into said sash (3) through said holes (9) of said weather shield (6),
each said fastener (10) further comprising a first fastening means for locking said fastener (10) to a corresponding engagement means of said sash (3) on activation of said fastener (10), thereby fastening said weather shield (6) to said sash (3),
said connection part (12) extending into said first fastening means comprising a radial protrusion (13) with an engagement member for being snap-locked to said corresponding engagement means of said sash (3) on activation of said fastener (10), thereby fastening said weather shield (6) to said sash (3), **characterized in that**
said first fastening means of said fastener (10) is adapted to engage and be released from said engagement means of said sash member by means of rotation of said fastener (10), and
wherein a gasket member (21) abutting said upper surface of said weather shield (6) is provided on a lower surface of said head part (11),
elasticity of the gasket (21) providing for an easier fastening of the fastener (10).

2. A weather shield (6) according to claim 1, which is manufactured from zinc or aluminium.

3. A weather shield (6) according to claim 1 or 2, wherein said radial protrusion (13) is clog-shaped, an upwards projecting tip end (14) of said clog shape forming said engagement member of said fastener (10).

4. A weather shield (6) according to any one of claims 1 to 3, wherein said first fastening means comprises a further radial protrusion corresponding to and protruding substantially oppositely to said radial protrusion for being snap-locked to corresponding engagement means of said sash (3).

5. A weather shield (6) according to any one of the previous claims, wherein said head part (11) comprises grip means operable by hand to rotate said fastener (10) such as to provide engagement between said first fastening means of said fasteners (10) and said engagement means of said sash (3).

6. A weather shield (6) according to claim 5, wherein said grip means comprises two finger depressions (15, 16) positioned such as, in a fastened position of said fastener (10), to allow for rain water and snow falling on said weather shield (6) to pass said head part (11).

7. A weather shield (6) according to any one of the previous claims, each said fastener (10) further comprising a second fastening means, preferably a snap lock (17, 18), adapted to be positioned abutting a lower surface of said weather shield (6) when said connection part (12) extends through said hole (9) of said weather shield (6) to, cooperating with said head part (11), be substantially unreleasable from and rotatable in relation to said weather shield (6).

8. A weather shield (6) according to any one of the previous claims, wherein said fasteners (10) are positioned to fasten a sash (3) of a window portion to said weather shield (6) covering said sash (3), said fasteners (10) extending through said peripheral holes (9) of said weather shield (6) to engage said sash (3), said sash (3) comprising extruded sash members with a hollow sash member profile.

9. A weather shield (6) according to claims 3 and 8, wherein said engagement means of said sash member comprises a downwards protruding bead (19), said tip end (14) of said engagement member of said fastener (10) extending upwards to engage said downwards protruding bead (19) such as to snap lock said fastener (10) and said sash member to each other on rotation of said fastener (10).

10. A weather shield (6) according to claim 10 or 11, wherein said peripheral hole (9) is formed in an upwardly protruding dimple (20) of said weather shield (6).

11. A weather shield (6) according to any one of claims 8 to 10, wherein said sash (3) on an upper surface comprises a longitudinally extending resilient sealing member (7, 8) abutting a lower surface of said weather shield (6).

12. A weather shield (6) according to any one of claims 8 to 11, wherein said window portion comprises a top (3b), a bottom (3a) and two side (3c) sash members defining said window sash (3), and a top, a bottom and two side frame members defining a window frame (4), said bottom sash member (3a) being hinged to said bottom frame member (4a) by means of a pivot hinge defining a pivot axis such as to pivotally connect said window sash (3) to said window frame (4).

13. A weather shield (6) according to any one of the previous claims, said respective fasteners (10) comprising a second fastening means, preferably a snap lock (17, 18), positioned abutting a lower surface of said weather shield (6), said fasteners (10), due to cooperation between said second fastening means and said head part (11), being substantially unreleasable from and rotatable in relation to said weather shield (6).

14. A weather shield (6) according to any one of claims 8 to 13, wherein said sash (3) comprises a bottom (3a), a top (3b) and two side (3c) sash members and encloses a windowpane (5) with two layers of glazing.

## Patentansprüche

1. Wetterschutz (6) zum Befestigen an einem hohlen Flügel-element-Profil eines Fensterflügels (3), der eine Anzahl von Befestigungselementen (10) zum Befestigen von Letzteren an dem hohlen Flügelelement-Profil aufweist, wobei jedes Befestigungselement (10) einen Kopfteil (11) umfasst, der mit einem Verbindungsteil (12) verbunden ist, wobei die entsprechenden Kopfteile (11) an einer oberen Fläche des Wetterschutzes (6) anliegend positioniert sind und sich die entsprechenden Verbindungsteile (12) durch Umfangslöcher (9) des Wetterschutzes (6) hindurch erstrecken, um dadurch angepasst zu sein, sich in den Flügel (3) durch die Löcher (9) des Wetterschutzes (6) zu erstrecken,
wobei jedes der Befestigungselemente (10) ferner ein erstes Befestigungsmittel zum Sichern des Befestigungselements (10) an einem entsprechenden Eingriffsmittel des Flügels (3) bei Aktivierung des Befestigungselements (10) umfasst, wobei dabei der Wetterschutz (6) an dem Flügel (3) befestigt wird,
wobei der Verbindungsteil (12), der sich in das erste Befestigungsmittel hinein erstreckt, einen radialen Vorsprung (13) mit einem Eingriffselement zum Verrasten mit dem entsprechenden Eingriffsmittel des Flügels (3) bei Aktivierung des Befestigungselements (10) umfasst, um dadurch den Wetterschutz (6) an dem Flügel (3) zu befestigen, **dadurch gekennzeichnet, dass**
das erste Befestigungsmittel des Befestigungselements (10) angepasst ist, um mittels einer Drehung des Befestigungselements (10) in das Eingriffsmittel des Flügelelements einzugreifen und von diesem gelöst zu werden, und wobei ein Dichtungselement (21), das an der oberen Fläche des Wetterschutzes (6) anliegt, auf einer unteren Fläche des Kopfteils (11) vorgesehen ist,
wobei die Elastizität der Dichtung (21) für ein einfacheres Befestigen des Befestigungselements (10) sorgt.

2. Wetterschutz (6) nach Anspruch 1, der aus Zink oder Aluminium hergestellt ist.

3. Wetterschutz (6) nach Anspruch 1 oder 2, wobei der radiale Vorsprung (13) schuhförmig ist, wobei ein nach oben vorstehendes Spitzenende (14) der Schuhform das Eingriffselement des Befestigungselements (10) bildet.

4. Wetterschutz (6) nach einem der Ansprüche 1 bis 3, wobei das erste Befestigungsmittel einen weiteren radialen Vorsprung umfasst, der dem radialen Vorsprung entspricht und sich zu diesem im Wesentlichen entgegengesetzt erstreckt, um mit einem entsprechenden Eingriffsmittel des Flügels (3) verrastet zu werden.

5. Wetterschutz (6) nach einem der vorhergehenden Ansprüche, wobei der Kopfteil (11) ein Griffmittel umfasst, das mit der Hand bedienbar ist, um das Befestigungselement (10) zu drehen, um so einen Eingriff zwischen dem ersten Befestigungsmittel der Befestigungselemente (10) und dem Eingriffsmittel des Flügels (3) vorzusehen.

6. Wetterschutz (6) nach Anspruch 5, wobei das Griffmittel zwei Fingermulden (15, 16) umfasst, die positioniert sind, um in einer befestigten Position des Befestigungselements (10) zuzulassen, dass auf den Wetterschutz (6) fallendes/r Regenwasser und Schnee an dem Kopfteil (11) vorbei läuft.

7. Wetterschutz (6) nach einem der vorhergehenden Ansprüche, wobei jedes Befestigungselement (10) ferner ein zweites Befestigungsmittel, bevorzugt einen Rastverschluss (17, 18), aufweist, der angepasst ist, um an einer unteren Fläche des Wetterschutzes (6) anliegend positioniert zu sein, wenn sich der Verbindungsteil (12) durch das Loch (9) des Wetterschutzes (6) hindurch erstreckt, um mit dem Kopfteil (11) zusammenwirkend im Wesentlichen unlösbar von dem Wetterschutz (6) und drehbar bezüglich desselben zu sein.

8. Wetterschutz (6) nach einem der vorhergehenden Ansprüche, wobei die Befestigungselemente (10) positioniert sind, um einen Flügel (3) eines Fensterabschnitts an dem den Flügel (3) abdeckenden Wetterschutz (6) zu befestigen, wobei sich die Befestigungselemente (10) durch die Umfangslöcher (9) des Wetterschutzes (6) hindurch erstrecken, um in den Flügel (3) einzugreifen, wobei der Flügel (3) extrudierte Flügelelemente mit einem hohlen Flügelelement-Profil umfasst.

9. Wetterschutz (6) nach Anspruch 3 und 8, wobei das Eingriffsmittel des Flügelelements einen nach unten vorstehenden Wulst (19) umfasst, wobei sich das Spitzenende (14) des Eingriffselements des Befestigungselements (10) nach oben erstreckt, um in den nach unten vorstehenden Wulst (19) einzugreifen, um bei einer Drehung des Befestigungselements (10) das Befestigungselement (10) und das Flügelelement miteinander zu verrasten.

10. Wetterschutz (6) nach Anspruch 10 oder 11, wobei das Umfangsloch (9) in einer nach oben vorstehenden Vertiefung (20) des Wetterschutzes (6) gebildet ist.

11. Wetterschutz (6) nach einem der Ansprüche 8 bis 10, wobei der Flügel (3) auf einer oberen Fläche ein sich in Längsrichtung erstreckendess elastisches Dichtelement (7, 8) umfasst, das an einer unteren Fläche des Wetterschutzes (6) anliegt.

12. Wetterschutz (6) nach einem der Ansprüche 8 bis 11, wobei der Fensterabschnitt ein oberes (3b), ein unteres (3a) und zwei seitliche (3c) Flügelelemente, die den Fensterflügel (3) definieren, und ein oberes, ein unteres und zwei seitliche Rahmenelemente, die einen Fensterrahmen (4) definieren, umfasst, wobei das untere Flügelelement (3a) mithilfe eines Schwenkgelenks, das eine Schwenkachse definiert, an dem unteren Rahmenelement (4a) angelenkt ist, um den Fensterflügel (3) verschwenkbar mit dem Fensterrahmen (4) zu verbinden.

13. Wetterschutz (6) nach einem der vorhergehenden Ansprüche, wobei die entsprechenden Befestigungselemente (10) ein zweites Befestigungsmittel, bevorzugt einen Rastverschluss (17, 18), umfassen, das an eine untere Fläche des Wetterschutzes (6) anliegend positioniert ist, wobei die Befestigungselemente (10) infolge des Zusammenwirkens zwischen dem zweiten Befestigungsmittel und dem Kopfteil (11) im Wesentlichen unlösbar von dem Wetterschutz (6) und drehbar bezüglich desselben sind.

14. Wetterschutz (6) nach einem der Ansprüche 8 bis 13, wobei wobei der Flügel (3) ein unteres (3a), ein oberes (3b), und zwei seitliche (3c) Flügelelemente umfasst und eine Fensterscheibe (5) mit zwei Verglasungsschichten umschließt.

## Revendications

1. Dispositif de protection contre les intempéries (6) destiné à être fixé sur un profilé creux d'un élément de châssis de fenêtre (3), comprenant une pluralité de pièces de fixation (10) permettant de fixer ces dernières audit profilé creux, chacune desdites pièces de fixation (10) comprenant une partie de tête (11) raccordée à une partie de connexion (12), lesdites parties tête respectives (11) étant positionnées en butée d'une surface supérieure dudit dispositif de protection contre les intempéries (6), lesdites parties de connexion respectives (12) s'étendant au travers des trous périphériques (9) dudit dispositif de protection contre les intempéries (6) de sorte qu'elles sont conçues pour s'étendre dans ledit cadre (3) au travers desdits trous (9) dudit dispositif de protection contre les intempéries (6),
chacune desdites pièces de fixation (10) comprenant, de plus, des premiers moyens de fixation pour verrouiller ladite pièce de fixation (10) sur des moyens d'engagement correspondants dudit châssis (3) lors de l'activation de ladite pièce de fixation (10), fixant, de ce fait, ledit dispositif de protection contre les intempéries (6) sur ledit châssis (3),
ladite partie de connexion (12) s'étendant dans lesdits premiers moyens de fixation comprenant une partie radiale en saillie (13) pourvue d'un élément d'engagement pour être verrouillée par encliquetage avec lesdits moyens d'engagement correspondants dudit châssis (3) lors de l'activation de ladite pièce de fixation (10), fixant de ce fait ledit dispositif de protection contre les intempéries (6) sur ledit châssis (3),
**caractérisé en ce que**
lesdits premiers moyens de fixation de ladite pièce de fixation (10) sont conçus pour s'engager avec lesdits, et être libérés desdits, moyens d'engagement dudit élément de châssis par l'intermédiaire de la rotation de ladite pièce de fixation (10), et
dans laquelle un élément de garniture d'étanchéité (21) venant en butée contre ladite surface supérieure dudit dispositif de protection contre les intempéries (6) est prévu sur une surface inférieure de ladite partie de tête (11),
l'élasticité de la garniture d'étanchéité (21) fournissant une fixation plus facile de la pièce de fixation (10).

2. Dispositif de protection contre les intempéries (6) selon la revendication 1, **caractérisé en ce qu'**il est fabriqué à partir de zinc ou d'aluminium.

3. Dispositif de protection contre les intempéries (6) selon la revendication 1 ou 2, **caractérisé en ce que** ladite partie radiale en saillie (13) est configurée sous la forme d'un sabot dont une extrémité se termine par une pointe vers le haut (14) formant ledit élément d'engagement de ladite pièce de fixation (10).

4. Dispositif de protection contre les intempéries (6) selon l'une quelconque des revendications 1 à 3, **caractérisé en ce que** lesdits premiers moyens de fixation comprennent de plus une partie radiale en saillie correspondant à, et faisant saillie essentiellement à l'opposé de, ladite partie radiale en saillie, en vue d'être verrouillée par encliquetage dans les moyens d'engagement correspondants dudit châssis (3).

5. Dispositif de protection contre les intempéries (6) selon l'une quelconque des revendications précédentes, **caractérisé en ce que** ladite partie de tête (11) comprend des moyens de prise pouvant être fonctionnels à la main afin de faire tourner ladite pièce de fixation (10) de façon à fournir un engagement entre lesdits premiers moyens de fixation desdites pièces de fixation (10) et lesdits moyens d'engagement dudit châssis (3).

6. Dispositif de protection contre les intempéries (6) selon la revendication 5, **caractérisé en ce que** lesdits éléments de prise comprennent deux évidements pour les doigts (15, 16) positionnés de façon à, dans une position fixée de ladite pièce de fixation (10), permettre à l'eau de pluie et à la neige tombant sur ledit dispositif de protection contre les intempéries (6) de couler sur ladite partie de tête (11).

7. Dispositif de protection contre les intempéries (6) selon l'une quelconque des revendications précédentes, chaque dite pièce de fixation (10) comportant, en outre, des seconds moyens de fixation, de préférence, une fermeture à encliquetage (17, 18), conçus pour être positionnés en butée avec une surface inférieure dudit dispositif de protection contre les intempéries (6) lorsque ladite partie de connexion (12) s'étend à travers ledit trou (9) dudit dispositif de protection contre les intempéries (6), afin que, en coopérant avec ladite partie de tête (11), elle ne puisse être essentiellement libérée de, ni mise en rotation par rapport à, ledit dispositif de protection contre les intempéries (6).

8. Dispositif de protection contre les intempéries (6) selon l'une quelconque des revendications précédentes, **caractérisé en ce que** lesdites pièces de fixation (10) sont positionnées pour fixer un châssis (3) d'une partie de fenêtre dudit dispositif de protection contre les intempéries (6) recouvrant ledit châssis (3), lesdites pièces de fixation (10) s'étendant à travers lesdits trous périphériques (9) dudit dispositif de protection contre les intempéries pour s'engager avec ledit châssis (3), ledit châssis (3) comprenant des éléments de châssis extrudés présentant des éléments profilés creux de châssis.

9. Dispositif de protection contre les intempéries (6) selon les revendications 3 et 8, **caractérisé en ce que** lesdits moyens d'engagement dudit élément de châssis comprennent une nervure vers le bas (19), ladite extrémité de pointe (14) dudit élément d'engagement de ladite pièce de fixation (10) s'étendant vers le haut pour s'engager avec ladite nervure (19) s'étendant vers le bas de façon à verrouiller par encliquetage ladite pièce de fixation (10) et ledit élément de châssis l'un avec l'autre lors de la rotation de ladite pièce de fixation (10).

10. Dispositif de protection contre les intempéries (6) selon les revendications 10 ou 11, **caractérisé en ce que** ledit trou périphérique (9) est formé par un bossage faisant saillie vers le haut (20) dudit dispositif de protection contre les intempéries (6).

11. Dispositif de protection contre les intempéries (6) selon l'une quelconque des revendications 8 à 10, **caractérisé en ce que** ledit châssis (3) comprend, sur une surface supérieure, un élément élastique d'étanchéité s'étendant longitudinalement (7, 8) venant en butée sur une surface inférieure dudit dispositif de protection contre les intempéries (6).

12. Dispositif de protection contre les intempéries (6) selon l'une quelconque des revendications 8 à 11, **caractérisé en ce que** ladite partie de fenêtre comprend une partie supérieure (3b), une partie inférieure (3a) et deux éléments latéraux de châssis (3c) définissant ledit châssis de fenêtre (3), et une partie supérieure, une partie inférieure et deux éléments latéraux de cadre définissant un cadre de fenêtre (4), ledit élément de châssis inférieur (3a) étant articulé au dit élément de cadre inférieur (4a) au moyen d'une articulation à pivotement définissant un axe de pivotement de façon à relier de manière pivotante ledit châssis de fenêtre (3) au dit cadre de fenêtre (4).

13. Dispositif de protection contre les intempéries (6) selon l'une quelconque des revendications précédentes, lesdites pièces de fixation respectives (10) comprenant des seconds moyens de fixation, de préférence, une fermeture à encliquetage (17, 18), positionnés pour venir en butée avec une surface inférieure dudit dispositif de protection contre les intempéries (6), lesdites pièces de fixation (10), en raison de la coopération entre lesdits seconds moyens de fixation et ladite partie de tête (11), ne pouvant essentiellement être libérées de, ni mises en rotation par rapport à, ledit dispositif de protection contre les intempéries (6).

14. Dispositif de protection contre les intempéries (6) selon l'une quelconque des revendications précédentes 8 à 13, **caractérisé en ce que** ledit châssis (3) comprend une partie inférieure (3a), une partie supérieure (3b) et deux éléments de châssis latéraux (3c) et enserre une vitre pour fenêtre (5) pourvue de deux couches de vitrage.
